# EUROPEAN PATENT SPECIFICATION

(11) **EP 1 273 182 B1**
(45) Date of publication and mention of the grant of the patent: **02.05.2007**
(21) Application number: 01917062.0
(22) Date of filing: 05.03.2001
(51) Int. Cl.: H04Q 7/22, H04L 29/06

(54) **SECURE DATA DOWNLOAD IN A CELLULAR COMMUNICATION SYSTEM**
SICHERES LADEN VON DATEN IN EINEM ZELLULAREN KOMMUNIKATIONSSYSTEM
TELECHARGEMENT SUR DE DONNEES DANS UN SYSTEME DE COMMUNICATION CELLULAIRE

(30) Priority: 04.03.2000 GB 0005173
(43) Date of publication of application: 08.01.2003
(73) Proprietor: MOTOROLA INC., Schaumburg, Illinois 60196 (US); Shi, Rong, Swindon, Wiltshire SN2 3WH (GB); Ellis, Martin, John, Swindon, Wiltshire SN3 1PT (GB); Cataldo, Mark, Southampton, Hampshire SO16 7FR (GB)
(72) Inventor: SHI, Rong, Swindon, Wiltshire SN2 3WH (GB); ELLIS, Martin, John, Swindon, Wiltshire SN3 1PT (GB); CATALDO, Mark, Southampton, Hampshire SO16 7FR (GB)
(74) Representative: Jepsen, René Pihl
(86) International application number: PCT/EP2001/002455
(87) International publication number: WO 2001/067785

(56) References cited:
- WO-A-00/74412
- WO-A-95/33237
- WO-A-97/05551
- WO-A-98/21683

## Description

### Field of the Invention

This invention relates, in general, to a communication system controlling data download to adaptable subscriber equipment and is particularly, but not exclusively, applicable to the regulation of application software within a downloadable terminal, such as a third generation radio communication device.

### Background of the Invention

With the development of communication technology, there is an ever-increasing demand by subscribers to personalise subscriber equipment functionality to meet individual (or group) requirements. Such subscriber equipment may take a number of forms, including (but not limited to): i) the so-called software radio proposed in third generation cellular systems, such as the universal system for mobile communication (UMTS); and ii) adaptable terminal equipment, such as a computer on a local area network (LAN).

For a considerable period, it has been a desire to download software. Now, with internet access and the development of data packet transfer technologies in the radio frequency domain, software download and terminal adaptation is becoming a reality. Software download from a server (or content provider) can, of course, be in a number of guises, including entire software applications (such as replacement mobile specific firmware) and software patches that address specific technical faults that have been identified subsequent to an initial release of code. Software download may also be content specific in that it is assessed on a demand basis from a content provider and may therefore appear to be general Internet information, such as e-commerce messages, web pages, etc. Furthermore, software can be provided in the form of code on an adjunct "plug-in" memory expansion cards or SIM cards for use within subscriber equipment.

An example of a system which protects a computer from suspicious downloads is presented in Patent Cooperation Treaty Patent Application Publication no. WO98/21683A. The described system comprises a security policy which can be applied to a client to whom a download is addressed.

Patent Cooperation Treaty Patent Application Publication no. WO95/33237A1 describes a computer virus trapping device which detects and eliminates computer viruses before they can enter a computer system.

In the next generation of mobile communication systems, mobile subscriber units will be able to access the Internet directly via packet switched bearers across both an air-interface and in a wireline or optical network. Furthermore, it is envisaged that services in the future will be de-coupled from the communication network, implying that the roles of network operators, service providers and manufacturers can be clearly distinguished and supported independently by unrelated parties. In theory, therefore, download of either software or content can be acquired from any accessible source. Moreover, it will be appreciated that the openness of the Internet, although desirable, leads to a very insecure network in which a subscriber can inadvertently compromise its own subscriber equipment functionality through the downloading of incompatible or deliberately malicious code. In the former instance, contemporaneous operation of downloaded code with existing software/firmware within the subscriber unit may merely inadvertently cause system failure or system crash. Maliciously produced rogue software, which is generally referred to as supporting "security attacks" may deliberately either seek to disrupt and divert data processed by the subscriber unit or, more alarmingly, to destroy third party equipment by permanently overwriting or disabling critical functions or data. Indeed, without security protection, security attacks can be relatively easily performed on specific communication packets or periods (within a call or internet access session) and to network nodes (such as subscriber units and servers).

Therefore, as regards the personalisation of subscriber equipment, there are inherent risks unfortunately associated with both the augmentation in the number of software applications supported by the subscriber equipment and the update or replacement of code from, generally, unvetted data repositories over a non-secure communication resource, such as the Internet.

To address some forms of security attack, virus checkers have been developed (for use in computer-based terminal technology) to scan for rogue software deliberately produced to infect a host processor. Such virus checkers must be constantly updated to address new strains of computer virus.

As regards types of security attack, these can generally be classified as falling within one of two categories, namely a first category in which it is desired to seek covert access to information and a second category that operates to disrupt, adapt or otherwise compromise legitimate system or subscriber unit operation.

Security attacks in the first category include the concepts of: i) sniffing at a user request and then intercepting the software (or content) based on a perceived importance/relevance of the user request; ii) "man in the middle" access where an entity intercepts authentication requests between a user and a certification authority, thereby compromising security (in, for example, an e-commerce environment); and iii) general interrupt of download. The common thread between these forms of security attack is that there is direct access to the information through, for example, the tapping of a dedicated communication path. One hybrid attack mechanism relates to use of malicious code in which a third party entity (e.g. a malicious employee) gains a valid "signing certificate" by passing all certificate authority background checks, but whereafter the third party creates and signs malicious content. The first category of security attacks are difficult to address otherwise than on the basis of providing a secure communication link.

The second category of security attack goes directly to the alteration of functionality (by way of corruption of code) in the subscriber unit or host processor. There are numerous forms of such corruption, with major mechanism identified below. First, a third party may modify the software (or content) in the course of a download to a requesting subscriber unit or LAN gateway apparatus, such as a network server/node. Second, the so-called Trojan Horse attack results in a processing system appearing to action/execute requested procedure whereas the processing system is actually doing something nefarious and supplementary to the requested procedure, e.g. control of the subscriber unit is effectively taken over by a third party unconnected with the legitimate owner. Third, an uplink message for software download is intercepted and an impersonation of an addressed server (by a third party) leads to the download of malicious or hostile code to a processor requesting the download. Fourth, a subscriber unit or server incident to downloaded software may simply be flooded with dummy codes. Fifth, a third party hacker could compromise a server to modify the software or content on the server before the start of the software downloading process.

Generally, in the event that the addressed server or data repository is not properly guarded, hackers can compromise the server by corrupting its stored data. In this case, there is no outward indication that the data offered by the server is corrupted and so, as a trusted bona fide server, the server is still accessible and interactive on the basis of authentic certificates passing between an addressing node (such as a subscriber unit) and the server itself. Clearly, in this instance, a subscriber unit may be inadvertently downloaded with corrupted software of a malicious nature. In fact, if corrupted mission-critical executable radio software (RF/IF baseband algorithms) is downloaded to a mobile unit, the mobile unit may be caused to mis-function or to terminate a function prematurely; this is of particular concern. More specifically, the problem of corrupted downloaded code in a mobile environment is exacerbated by the inherent mobile nature of the subscriber unit (e.g. a cellular phone or UMTS terminal) since contact with the mobile unit may be cut or otherwise prevented and so such contact cannot be re-established directly. Therefore, a mobile subscriber and the service provider may both be totally oblivious of any phone/equipment error or failure. As such, from a subscriber standpoint, there is simply no discernible indication of loss of service, whereas an operator will suffer loss of associated service revenue.

Clearly, it will now be appreciated that software download is very vulnerable to one or more security attacks, and a strong security mechanism is therefore preferable to safeguard the software download against security attacks in general.

The so-called Mobile Execution Environment (MexE) has been proposed in 3GPP T2 to provide automatic secure transfer of applications, applets and content. An authentication mechanism implemented in MExE is based on the CCITT X.509 digital certificate that allows a subscriber unit and server to authenticate each other effectively. A standalone encryption mechanism is used to provide privacy for downloaded software (or content). The current MExE approach for secured software/content download is to sign the software/content with a digital certificate that is authorised by a Trust Certificate Authority. The Certificate will uniquely identify the server to authenticate to the subscriber that the downloaded software/content comes from the trusted server; such a scenario exists where, for example, the server belongs to a handset manufacturer. In other words, certificates essentially contain a digital signature unique to the equipment and an encryption key for subsequent use in decoding of data packets (or the like) transferred between the subscriber unit and server.

Unfortunately, the security mechanism provided in MExE can only prevent certain security attacks, principally modification of software in the download. Besides bytecode verification that is implemented in a Java sandbox, MexE provides no explicit security protection against security attacks that directly affect an originating server or which fraudulently obtain a valid authentication certificate.

In somewhat more detail, it will be appreciated that the Java language allows Java-compatible Web browsers to download code fragments dynamically and then to execute this code in the machine. Original Java security utilises a sandbox that imposes strict controls on what Java programs can and cannot do by limiting the rights for applets. Apart from granting Java code special privileges, Java sandbox controls access to system resources for the downloaded code.

In the context of a computer terminal/workstation, once the code is downloaded to a workstation's Java sandbox, the Java sandbox will perform serial regimes of verifications, including class file format checking and bytecode verification. In the bytecode verification, the bytecodes are executed by means of a run-time system, i.e. an emulator for the virtual machine's instruction set. A bytecode verifier verifies all the bytecodes by: i) analysing data-flows to see if there is any violation against stack overflow; and ii) accessing registers directly. The bytecode verifier is arranged to "call" (i.e. identify as being potentially corrupt) those routines or sub-routines for which, for example, inappropriate arguments are obtained or arguments are obtained with inappropriate type. However, the Java sandbox bytecode verification mechanism only performs a language dependent-type check, and acts to protect local resources from un-granted access and further prevents violation operations by ensuring that code adheres to predetermined constraints. The predetermined constraints may ensure that there are no stack overflows or underflows, and that there is valid register access and storage. Additionally, the bytecode verifier looks to the correct allocation of parameters to all bytecode instructions, and further ensures that no illegal data conversions occur. Even with this level of complexity, the Java sandbox is deficient in that it is unable to accommodate security attacks that are consequential on either a hacked compromise of software stored on a server, the use of an intercepted authentic certificate or the Trojan Horse attack.

As an intermediate summary of the Java sandbox technique, it will now be appreciated that Java sandbox provides a restrictive access function to Java code, thereby preventing access to memory locations otherwise un-associated with specific Java applets. Consequently, software interaction is limited with the Java sandbox providing an absolute security curtain.

In MExE classmark II, which is based on Personal Java, the bytecode verification is used to verify that the downloaded Java code conforms to the virtual machine execution condition. However, there is no requirement for manufacturers to utilise a single code format and so codes in languages other than Java may be used in a downloadable environment, such as in the case of executable radio system (or sub-system) software.

Of course, one could employ a brute-force mechanism of protection, whereby all forms of function personalisation are restricted. For example, computer systems have been designed to operate with a firewall/proxy/cache. A firewall/proxy can provide protection to clients by filtering/blocking attempts to retrieve content and the resulting fetched content. The mechanisms currently used by internet firewalls/proxies are very coarse (e.g. filter out all javaScript, block all accesses to site http://hackedcode.com) and cannot support the fine-grained approach needed in today's evolving communication environment.

### Summary of the Invention

According to a first aspect of the present invention there is provided a cellular communication system according to claim 1.

In a preferred embodiment, the sanity check point function includes means for assessing at least one of compatibility of and security attacks within the data content and code, respectively, downloaded from the third party data repository.

The communication system may further comprise: a gateway to a home network containing the sanity check function; and a dedicated secure link between at least one third party data repository; and wherein the home network further includes: means for selectively disabling the sanity check point function in response to a request to download at least one of data content and code across the dedicated secure link.

A visiting network may be coupled to the home network, with the visiting network supporting communication to a subscriber unit primarily affiliated with the home network. The communication system may then further include: means for referring a request for download from the subscriber unit in the visiting network to the sanity check point function in the home network.

A globally accessible network, such as the internet, is typically coupled between the third party data repository and the sanity check point function.

As regards the predetermined operational status, its level is arbitrarily set but may be subject to the extent to which critical operating systems are affected. Consequently, total operational compliance may be demanded in certain instances, whereas on other occasions minor faults in subsequent node operation may be acceptable (e.g. in the instance when an existing firmware problem is known within the node, such as a cell phone, the up-grade to partially operational system software may represent an improvement in operational functionality).

In a second aspect of the present invention there is provide a method of controlling data download in accordance with claim 10.

In a further aspect of the present invention there is provided a control device for regulating download of data in accordance with claim 18.

In yet another aspect of the present invention there is provided a computer program product for a controller in accordance with claim 25.

Preferably, when a mobile subscriber, for example, requests download of code that could affect its operating system, such code is always sent to a sanity check-point function deterministic of code compatibility irrespective of where the mobile subscriber is located.

Advantageously, the present invention provides a mechanism by which a system operator (or other system administrator) can perform a sanity check on potentially suspect downloadable code that has been requested by a subscriber to update or augment existing code within a subscriber's node or communication device. Considering the application of the present invention to a mobile radio communication device environment, the ability of the system operator (or system administrator) to regulate software upgrade mitigates potentially catastrophic software upgrades that adversely affect mobile unit operation. More particularly, the present invention allows the system operator to veto the download of software that could otherwise disrupt and prevent both system access (in the sense of both uplink and downlink connections) to the mobile radio communication device. Whilst the present invention can strictly regulate the download of software it is, however, able to be selective in its approach to regulation based upon a level of confidence the system operator has in a subscriber-accessed site or dedicated path. For example, if the subscriber accesses a site which in within a secure intranet, the download of software (especially application code, such as interactive Java applets) can be immediately sanctioned without administrator review and interaction. Conversely, if the subscriber accesses a site which is deemed unsecure (such as through multiple gateways into a wide area Internet domain), then a more critical stance can be adopted by the administrator whereby downloadable code is treated sceptically and therefore subjected to an integrity/compatibility assessment according to the principals of the present invention.

The present invention therefore provides a verification mechanism (that acts as a software sanity check) for software, which mechanism is actionable at a time prior to both software download and upgrade. Therefore, the present invention addresses the needs of personalisation of mobile or other subscriber units or nodes whilst protecting mission-critical software from corruption. The preferred embodiment can be implemented at a number of alternative nodes within a communication system and may therefore provide service regulation of subscribers associated with a LAN (or the like), thereby allowing the verification mechanism to be shared between multiple subscriber units or nodes.

The present invention can be used, for example, in mobile communication software download products; it can be used to enhance the security strength in MExE and the Software Defined Radio (SDR). The present invention also finds application, for example, in 3GPP TSG T2 MExE standardisation, the SDR forum and the European Union funded 5^{th} Framework TRUST (Transparent Reconfigurable UbiquitouS Terminal) project.

### Brief Description of the Drawings

An exemplary embodiment of the present invention will now be described with reference to the Drawings, in which:
FIG. 1 is a block diagram of a communication system according to a preferred embodiment of the present invention; and
FIG. 2 is a flow diagram of a preferred operating methodology of the present invention.

### Detailed Description of a Preferred Embodiment

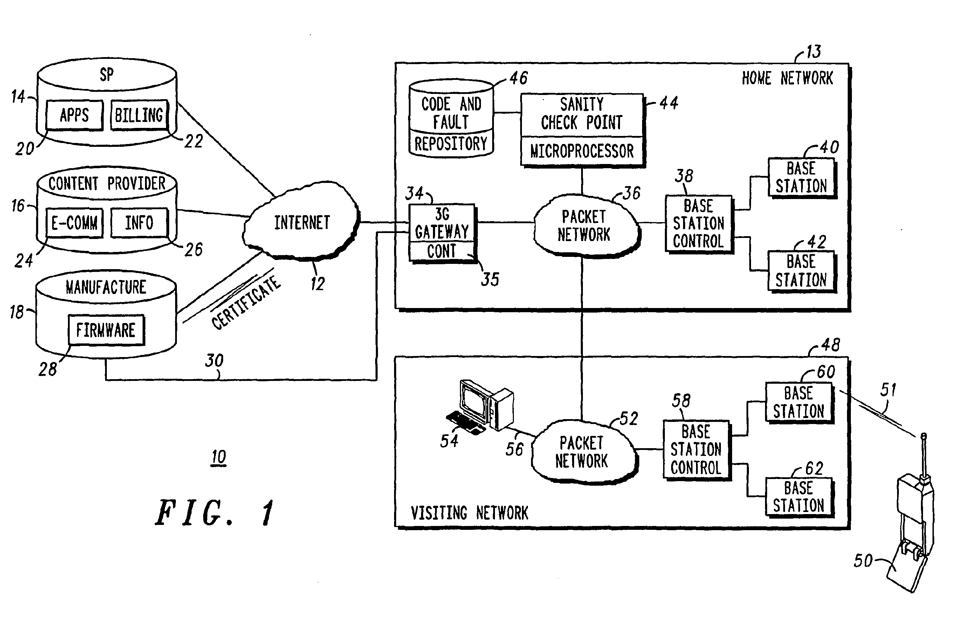

Turning to FIG. 1, there is shown a block diagram of a communication system 10 according to a preferred embodiment of the present invention. Many of the components of the communication system 10 are of conventional design.

An unsecure network 12, such as the Internet provides (typically) a packet-switched transport domain across which data traffic is passed between a home network 13 (which may be a LAN) and selective peripheral entities 14-18. By way of example and without limitation, a peripheral entity may take the form of service providers 14 containing application-based codes 20 (i.e. software and firmware) and billing information 22. Alternatively, a peripheral entity may be a content provider 16 providing services and access to e-commerce 24 or information 26 in general. A third form of peripheral entity 18 may be a server of a manufacturer, with this data site storing firmware 28 in the form of Java applets or the like.

With respect to any server 18 associated with a system manufacturer, although the site is shown to be interconnected to the home network 13 through the unsecure network 12, a supplementary or alternative connection to the server 18 could be by way of dedicated (and hence deemed secure) link 30. Generally, information transferred between the server 18 associated with a manufacturer and the home network 13 will include a certificate 32 to provide additional security (although the present invention effectively mitigates the use of certificates).

The various peripheral entities are inter-changeably known or referred to as third party data repositories, since they provide an accessible code or content resource that can be downloaded on request.

In relation to the home network 13, a gateway 34 provides a physical interface between the home network 13 and the unsecure network 12. The gateway 34 may take the form of a switch and generally provides some form of routing and/or inter-operability function, as will readily be appreciated. The gateway 34, which therefore includes control logic 35, is in turn coupled to a data network 36 (e.g. a packet-orientated domain) within the home network 13, which data network 36 allows interconnection of concerns. The gateway 34, which may be a Wireless Application Protocol (WAP) gateway, acts to pass messages in an unmolested fashion between end-points of a communication.

In a cellular-type environment, the data network 36 is typically coupled to a base station controller (BSC) 38 that administers a plurality of base station transceivers (BTSs) 40-42.

The data network 36 further provides interconnection to a sanity check-point function 44 generally realised within a processor or the like. The sanity check-point function 44, according to a preferred embodiment, is a code-based emulator representative of at least one node interconnected to the data network 36. The sanity check-point function 44 is further coupled to a code and fault repository 46 that stores emulation code as well as content and applications (e.g. software or firmware code) that have been downloaded across the unsecure network 12. The code and fault repository 46 may also include a results cache pertaining to previous emulation trails undertaken by the emulator of the sanity check-point function 44 in relation to downloaded code or content.

The data network 36 may also be a distribution point to additional visiting networks 48 to which a subscriber unit 50 (usually associated with the home network 13) can be temporarily affiliated. The subscriber unit 50 may therefore take the form of a mobile phone, for example. The construction of the visiting network 48 may reflect the home network 13 and is shown, by way of illustration, to contain a data network (e.g. a packet-based network supporting internet protocol or the like) 52 coupled to the home network's data network 36. Additionally, data network 52 is shown to be coupled to a computer 54 via a dedicated wireline or optical connection 56. The data network 52 of the visiting network 48 acts to provide a transport mechanism for information transfers between the peripheral entities 14-18 and, say, the subscriber unit 50 via a visiting BSC 58 and associated BTSs 60-62.

The present invention provides a mechanism that safeguards principally against security attacks that directly affect code stored in peripheral entities, although the present invention has wider application. The emulator within the sanity check-point function 44 in the home network 13 operates to provide a representation of a subscriber unit requesting download of content or code from the peripheral entities 14-18. The gateway is instructed to ensure that at least selective code or content downloaded across the unsecure network 12 is initially routed to and typically thereafter stored (at least temporarily) within the code and fault repository 46. The code or content is then run on the emulator, with the compatibility and interoperability of the code and content assessed by its interaction with the resulting emulation. More specifically, the sanity check-point function 44 will support a subscriber unit emulator for each type of node (e.g. BSC, BTS or subscriber unit or computer) supported by the home network 13. The sanity check-point function 44 therefore runs hostile code checking programs to detect security attacks, such as the Trojan Horse, denial-of-service or other forms of malicious (security) code attacks hidden within the downloaded code. The emulator therefore simulates the exact functions of a real requesting subscriber entity (as previously stored in the code and fault repository 46). Consequently, only once compatibility of the code and content has been assessed does download to a requesting subscriber actually occur. If the code is deemed incompatible or harmful, then the code is purged from the emulator and the code and fault repository 46 and an indication preferably made within the code and fault repository 46 that the site of the originating code or content should, in future, be treated sceptically or always disregarded. Such labelling of third party sites may be reviewed periodically by the home network 13 to address legitimate attempts by third party peripheral entities to address harmful or incompatible code or content.

As will be understood, the assessment of compatibility and interoperability of the code with the emulation can be based on techniques that utilise parameter checks such as arguments, overflows or underflows, and valid register access and storage within the emulation.

Preferably, the sanity check-point function 44 is owned by the home network 13 because the home network can always be assumed to be the trusted party with a well-protected network residing in the Network-Operator-Domain. As such, network nodes (such as the BSC 38, BTS 40-42 and subscriber unit 50) inside the home network are generally free of normal Internet-originating security attacks. Also, the home network 13 is usually responsible for proper operation and functioning of affiliated subscriber equipment, which means that the home network 13 can have an overall responsibility to ensure that the subscriber-specific software downloaded to a requesting subscriber unit works properly within the home network and so provides full subscriber unit functionality.

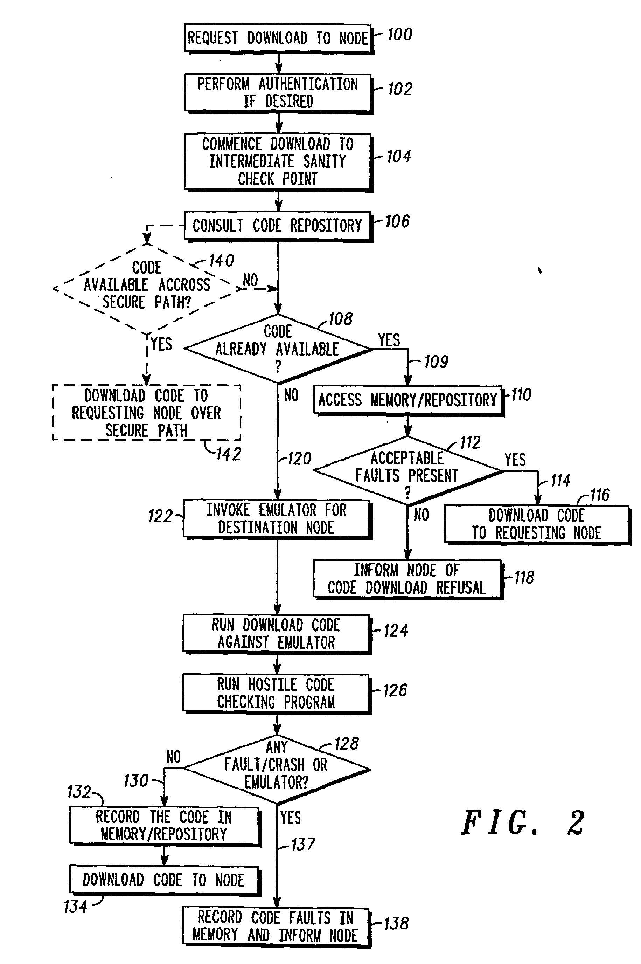

Turning to the flow diagram of FIG. 2, a preferred operating methodology for the present invention is shown. The process begins with a request 100 by a node for download of code or content from a remote third party site. Optionally, some form of certificate authentication 102 may take place to augment security. Content or code download (from the third party site) occurs 104 to the intermediate sanity check-point function 44, with this possibly requiring temporary storage of code within the code and fault repository 46. At some point in the process, the code and fault repository 46 may be checked 106-108 to identify whether an addressed (remote) third party site has been accessed before for the download of similar or identical code or content. In the affirmative 109, the system of the present invention accesses 110 memory to determine 112 whether such previously requested code or content contained no more than an acceptable level of interoperability faults (which level may have a zero-tolerance). A positive result 114 from decision block 112 results in local download 116 of code or content to the requesting node from the code and fault repository 46, thereby reducing wide area traffic. A negative result 114 from decision block 112 results in the request for download being denied and the node accordingly informed 118.

If no record of access effectively exists for the third party site, the process takes a second path 120 from decision block 108, with the second path leading to the invoking 122 of an emulator representative of the requesting node, e.g. mobile subscriber unit 50. The code or content downloaded from the third party site is run 124 with the emulator and a hostile code-checking program identifies 126-128 harmful or node incompatibility code. If the emulation is deemed unaffected or substantially unaffected (i.e. non-critically affected) by the downloaded code or content, flow proceeds along path 130 where a local record is preferably made 132 of the downloaded code (and stored for future reference in code and fault repository 46). The node requesting code or content download is then serviced 134 through the provision of downloaded data content or code. Should the decision from block 128 be affirmative 137, then the system preferably records the code but at least the existence of fault(s) in the code and fault repository 46 (i.e. a suitable database or memory device) and informs the node that download has been denied in view of incompatibility problems.

Of course, if the system (at the time of the download request) can access 140 a dedicated and hence secure path to an addressed peripheral entity, then download of the code to the requesting node may be immediate 142 and not subject to the emulation process and associated compatibility/harm assessments.

In summary, the sanity check-point functions interacts with the code and fault repository 46 to see if the code or content has been downloaded previous by other nodes within the home network 13. In the affirmative, the code and content previously stored in the code and fault repository 46 can be downloaded to the node to avoid superfluous emulation or WAN access. Otherwise, the sanity check-point function invokes the appropriate emulator for the type of node requesting download and then runs downloaded code against the node emulator. A hostile code-checking program detects possible security attacks. Once downloaded code or content passes the sanity check, it may be installed in the code and fault repository 46 for subsequent access and use by other like nodes. Conversely, if significant interoperability faults/problems are detected, the downloaded code or content (and an associated fault record) may be stored in the code and fault repository 46 in order to avoid a necessity for repeating the emulation process in response to a similar but later request from either the same node or a similar node.

It will, of course, be appreciated that the above description is given by way of example only and that modifications in detail may be made within the scope of the present invention. For example, the concept of utilising intermediate emulation equipment, typically in the form of a virtual machine (supported entirely within code), can be applied to all software or content supplied to a central node. The terms "third party data repository", "peripheral entity" or the like should therefore be considered in a broader sense to include, as necessary and when the context requires, the loading of a third party CD-ROM (or the like) into a central node for subsequent dissemination on a demand-driven basis. Consequently, inter-operability of software can be assessed by the present invention thereby yielding improved roll-out of software upgrades (arising from an ability to identify potential incompatibility/harmful code at an earlier, off-line stage). Therefore, a subscriber receiving a software upgrade can be confident that their subscriber unit is compatible with such new software and that any subsequent fault is therefore generally likely to be attributable to a hardware malfunction.

## Claims

1. A cellular communication system (10) including an interface (34) to a third party data repository (14,16,18) storing at least one of data content and code and a node (50) having means for requesting a download of at least one of the data content and code from the third party data repository; the cellular communication system **characterized by**:
a local code and fault repository (46) coupled to the interface (34), the local repository for storing received code and any faults associated therewith, as determined by code assessment means; and
a sanity check point function (44) responsive to the third party data repository (14,16,18) and coupled to the node (50), the sanity check point function including means to check whether the request for a download from the node is for data content or code previously assessed and stored in the local repository, wherein
if such content or code is present in the local repository (46) the means to check are operational to recover the faults associated therewith and to compare the faults to an acceptability level, wherein
if a level of faults is acceptable, the sanity check point function (44) is operational to download the data content or code directly to the requesting node (50), and
if the level of faults is not acceptable, the sanity check point function (44) is operational to deny the request for download from the node (50), and
if such content or code is not present in the local repository the sanity check point function (44) is operational to intercept at least one of data content and code downloaded from the third party data repository (14,16,18) in response to the node (50) requesting such download, the sanity check point function (44) including:
an emulator representative of the node and interactive with the at least one of the data content and code downloaded from the third party data repository (14,16,18) ;
code assessment means for assessing an operational status of the emulator following interaction of at least one of the data content and code downloaded from the third party data repository (14,16,18) with the emulator representative of the node; and
means for selectively forwarding to the node (50) the at least one of the data content and code downloaded from the third party data repository (14,16,18) subject to the assessment of the operation status satisfying a predetermined operational status.

2. The cellular communication system according to claim 1, wherein the sanity check point function (44) includes means for assessing at least one of compatibility of and security attacks within the data content and code, respectively, downloaded from the third party data repository (14,16,18).

3. The cellular communication system according to claim 1, wherein the code and fault repository (46) storing at least some of:
a plurality of differing node emulations associated with different forms of node coupled to the sanity check point (44); and
data content downloaded from identified third party data repositories (14,16,18).

4. The cellular communication system according to claim 3, wherein the means to check are responsive to an address of a third party data repository generated by the means for requesting download, for searching for the address in the code and fault repository (46); and the direct downloading to the node (50) of data content and code is associated with the address.

5. The cellular communication system according to any claim 1, further **characterized by**:
a gateway (34) to a home network (13) containing the sanity check function (44); and
a dedicated secure link (30) between at least one third party data repository (18);
and wherein the home network (13) further includes:
means for selectively disabling the sanity check point function in response to a request to download at least one of data content and code across the dedicated secure link.

6. The cellular communication system according to claim 5, further **characterized by** a visiting network (48) coupled to the home network (13), the visiting network supporting communication to a subscriber unit (50) primarily affiliated with the home network, the cellular communication system further including:
means for referring a request for download from the subscriber unit in the visiting network to the sanity check point function in the home network.

7. The cellular communication system according to claim 1, wherein the node (50) is serviced by a radio communication resource.

8. The cellular communication system according to claim 1, further **characterized by** a globally accessible network (12) coupled between the third party data repository (14,16,18) and the sanity check point function (10).

9. The cellular communication system according to claim 1, wherein the predetermined operational status is total operational compliance.

10. A method of controlling data download to a requesting (100) node in a network of a cellular communication system from a third party data repository storing at least one of data content and code, the method **characterized by** the steps of:
storing (132) received code and any faults (138) associated therewith;
checking (108) whether the request for a download from the node is for data content or code previously assessed and stored, wherein
if such content or code is stored, recovering (110) the faults associated therewith and comparing (112) the faults to an acceptability level, wherein
if a level of faults is acceptable, downloading (116) the data content or code directly to the requesting node, and
if the level of faults is not acceptable, denying (118) the request for download from the node, and
if such content or code is not stored,
intercepting within the network at least one of data content and code downloaded from the third party data repository in response to the node requesting such download;
generating (124) an emulation representative of the node;
causing (124) operational interaction between the emulation and at least one of the data content and the code downloaded from the third party data repository;
assessing (128) an operational status of the emulation following operational interaction of at least one of the data content and code downloaded from the third party data repository with the emulator representative of the node; and
selectively forwarding (134) to the node the at least one of the data content and code downloaded from the third party data repository subject to the assessment of the operation status satisfying a predetermined operational status.

11. The method of controlling data download according to claim 10, further **characterized by** the step of assessing at least one of a compatibility of and security attacks within the data content and code, respectively, downloaded from the third party data repository.

12. The method of controlling data download according to claim 10, wherein the storing step includes storing, in a code and fault repository within the network, at least some of:
a plurality of differing node emulations associated with different forms of node within the cellular communication system; and
data content downloaded from identified third party data repositories.

13. The method of controlling data download according to claim 12, wherein the checking step includes:
searching for an address of a third party data repository in a code and fault repository of the network; and
downloading directly to the node (50) data content and code associated with the address.

14. The method of controlling data download according to claim 10 , wherein the network further includes a gateway coupled to at least one third party data repository through a dedicated secure link, the method further **characterized by** the step of;
selectively disabling the generation of the emulation and the assessing of the operation status in response to the request to download at least one of data content and code across the dedicated secure link.

15. The method of controlling data download according to claim 14, further **characterized by** the step of referring a request for download from a subscriber unit in a visiting network via a home network.

16. The method of controlling data download according to claim 10, wherein the node is serviced by a radio communication resource.

17. The method of controlling data download according to claim 10, wherein a globally accessable network couples the third party data repository to the home network.

18. A control device (44) for regulating download of data to a requesting node in a network of a cellular communication system from a third party data repository storing at least one of data content and code, the control device (44)
**characterized by**:
means for storing received code and any faults associated therewith, as determined by code assessment means; and
means to check whether the request for a download from the node is for data content or code previously assessed and stored in the means for storing, wherein
if such content or code is present in the means for storing the means to check are operational to recover the faults associated therewith and to compare the faults to an acceptability level, wherein
if a level of faults is acceptable, the control device operates to download the data content or code directly to the requesting node, and
if the level of faults is not acceptable, the control device is operational to deny the request for download from the node, and
if such content or code is not stored, the device further comprising:
means operationally configured to intercept at least one of data content and code downloaded from the third party data repository in response to the node requesting such download;
an emulator representative of the node and interactive with the at least one of the data content and code downloaded from the third party data repository;
code assessment means for assessing an operational status of the emulator following interaction of at least one of the data content and code downloaded from the third party data repository with the emulator representative of the node; and
means for selectively forwarding to the node the at least one of the data content and code downloaded from the third party data repository subject to the assessment of the operation status satisfying a predetermined operational status.

19. The control device according to claim 18, further **characterized by** means for assessing at least one of compatibility of and security attacks within the data content and code, respectively, downloaded from the third party data repository.

20. The control device according to claim 18, wherein the means for storing comprise a code and fault repository (46) storing at least some of:
a plurality of differing node emulations associated with different forms of node coupled to the sanity check point; and
data content downloaded from identified third party data repositories.

21. The control device according to claim 20, wherein the means to check include:
means, responsive to an address of a third party data repository generated by the node, for searching for the address in the code and fault repository; and
means for directly downloading from the code and fault repository to the node at least one of data content and code associated with the address.

22. The control device according to claim 18, further **characterized by**:
means for selectively disabling the emulator in response to a request to download at least one of data content and code across a dedicated secure link incident to the control device.

23. A computer program element comprising computer program code means for making a controller execute procedure to perform the method steps of claim 10.

24. The computer program element of claim 23, embodied on a computer readable medium.

25. A computer program product for a controller (44) that controls data download to a requesting node in a home network of a cellular communication system from a third party data repository storing at least one of data content and code, the computer program product **characterized by**:
code for storing received code and any faults associated therewith, as determined by code assessment means; and
code to check whether the request for a download from the node is for data content or code previously assessed and stored, wherein
if such content or code is stored the code to check recovers the faults associated therewith and compares the faults to an acceptability level, wherein
if a level of faults is acceptable, the controller operates to download the data content or code directly to the requesting node,and
if the level of faults is not acceptable, the controller operates to deny the request for download from the node, and
if such content or code is not stored, the controller further comprising:
code, responsive to the node requesting a download, that directs the controller to intercept at least one of data content and code downloaded from the third party data repository;
code that directs the controller to generate an emulation representative of the node;
code that directs the controller to cause operational interaction between the emulation and at least one of the data content and the code downloaded from the third party data repository;
code that directs the controller to assess an operational status of the emulation following operational interaction of at least one of the data content and code downloaded from the third party data repository with the emulator representative of the node; and
code that directs the controller to selectively forward to the node the at least one of the data content and code downloaded from the third party data repository subject to the assessment of the operation status satisfying a predetermined operational status;
wherein the codes reside in a computer readable medium.

26. The computer program product of claim 25, further **characterized by**:
code that directs the controller to assess at least one of a compatibility of and security attacks within the data content and code, respectively, downloaded from the third party data repository.

27. The computer program product of claim 25, further **characterized by**:
code that directs the controller to search for an address of a third party data repository in a code and fault repository of a home network; and
code that directs the controller to download directly from the code and fault repository to the node at least one of data content and code associated with the address.

28. The computer program product of claim 25, wherein the network further includes a gateway coupled to at least one third party data repository through a dedicated secure link, and wherein the computer program product is further **characterized by**;
code that directs the controller to selectively disable the generation of the emulation and the assessing of the operation status in response to the request to download at least one of data content and code across the dedicated secure link.

29. The computer program product of claim 25, further **characterized by**:
code that directs the controller to refer a request for download from a subscriber unit in a visiting network via the subscriber unit's home network.

## Patentansprüche

1. Zellulares Kommunikationssystem (10) mit einer Schnittstelle (34) zu einem Datenspeicher (14, 16, 18) einer dritten Partei, in dem zumindest entweder ein Dateninhalt oder ein Code gespeichert ist, und einem Knoten (50) mit einer Einrichtung zum Anfordern eines Herunterladens zumindest entweder des Dateninhalts oder des Codes aus dem Datenspeicher der dritten Partei, wobei das zellulare Kommunikationssystem **gekennzeichnet ist durch**:
einen mit der Schnittstelle (34) gekoppelten lokalen Code- und Fehlerspeicher (46), der dazu vorgesehen ist, empfangenen Code und irgendwelche ihm zugeordnete, von einer Codebewertungseinrichtung bestimmte Fehler zu speichern, und
eine auf den Datenspeicher (14, 16, 18) der dritten Partei reagierende und mit dem Knoten (50) gekoppelte Plausibilitätsprüfpunktfunktion (44) mit einer Einrichtung zur Überprüfung, ob die Anforderung eines Herunterladens vom Knoten den Dateninhalt oder den Code betrifft, der zuvor bewertet und im lokalen Speicher gespeichert wurde, wobei
beim Vorhandensein eines derartigen Inhalts oder Codes im lokalen Speicher (46) die Einrichtung zur Überprüfung so betrieben werden kann, dass sie die damit verbundenen Fehler abruft und mit einem Akzeptierbarkeitsniveau vergleicht, wobei
bei akzeptablem Fehlerniveau die Plausibilitätsprüfpunktfunktion (44) so eingesetzt werden kann, dass sie den Dateninhalt oder den Code direkt auf den anfordernden Knoten (50) herunterlädt, und
bei inakzeptablem Fehlerniveau die Plausibilitätsprüfpunktfunktion (44) so eingesetzt werden kann, dass sie die Anforderung eines Herunterladens vom Knoten (50) zurückweist, und
beim Fehlen eines derartigen Inhalts oder Codes im lokalen Speicher die
Plausibilitätsprüfpunktfunktion (44) so eingesetzt werden kann, dass sie zumindest entweder einen Dateninhalt oder einen Code abfängt, der als Reaktion auf die Anforderung eines Herunterladens **durch** den Knoten (50) aus dem Datenspeicher (14, 16, 18) der dritten Partei heruntergeladen wird, wobei die Plausibilitätsprüfpunktfunktion (44) umfasst:
einen Emulator, der den Knoten repräsentiert und mit zumindest entweder dem Dateninhalt oder dem Code interaktiv ist, der von dem Datenspeicher (14, 16, 18) der dritten Partei heruntergeladen wird,
eine Codebewertungseinrichtung zum Bewerten eines Betriebsstatus des Emulators nach der Interaktion zumindest entweder des Dateninhalts oder des Codes, der von dem Datenspeicher (14, 16, 18) der dritten Partei heruntergeladen wird, mit dem den Knoten repräsentierenden Emulator, und
eine Einrichtung zum selektiven Weiterleiten zumindest entweder des Dateninhalts oder des Codes, der von dem Datenspeicher (14, 16, 18) der dritten Partei heruntergeladen wird, an den Knoten (50) nach Maßgabe der Bewertung, ob der Betriebsstatus einem vorgegebenen Betriebsstatus genügt.

2. Zellulares Kommunikationssystem nach Anspruch 1, bei dem die Plausibilitätsprüfpunktfunktion (44) eine Einrichtung zur Bewertung von zumindest entweder der Kompatibilität des Dateninhalts bzw. des Codes, der von dem Datenspeicher (14, 16, 18) der dritten Partei heruntergeladen wird, oder darin enthaltener Sicherheitsangriffe umfasst.

3. Zellulares Kommunikationssystem nach Anspruch 1, bei dem in dem Code- und Fehlerspeicher (46) zumindest einiges des Folgenden gespeichert ist:
mehrere unterschiedliche Knotenemulationen, die unterschiedlichen Arten von mit dem Plausibilitätsprüfpunkt (44) gekoppelten Knoten zugeordnet sind, und
ein von identifizierten Datenspeichern (14, 16, 18) dritter Parteien heruntergeladener Dateninhalt.

4. Zellulares Kommunikationssystem nach Anspruch 3, bei dem die Prüfeinrichtung auf eine von der Einrichtung zur Anforderung eines Herunterladens erzeugte Adresse eines Datenspeichers einer dritten Partei reagiert, um im Code-und Fehlerspeicher (46) nach der Adresse zu suchen, und das direkte Herunterladen des Dateninhalts und des Codes auf den Knoten (50) mit der Adresse verbunden ist.

5. Zellulares Kommunikationssystem nach Anspruch 1, ferner **gekennzeichnet durch**:
einen Netzübergang (34) zu einem eigenen Netzwerk (13), das die Plausibilitätsprüfpunktfunktion (44) enthält, und
eine zugewiesene sichere Verbindung (30) zu mindestens einem Datenspeicher (18) einer dritten Partei,
und wobei das eigene Netzwerk (13) weiterhin umfasst:
eine Einrichtung zur selektiven Deaktivierung der Plausibilitätsprüfpunktfunktion als Reaktion auf die Anforderung eines Herunterladens zumindest entweder eines Dateninhalts oder eines Codes über die zugewiesene sichere Verbindung.

6. Zellulares Kommunikationssystem nach Anspruch 5, ferner **gekennzeichnet durch** ein mit dem eigenen Netzwerk (13) gekoppeltes Besuchsnetzwerk (48), das die Kommunikation mit einer primär an das eigene Netzwerk angegliederten Teilnehmereinheit (50) unterstützt, wobei das zellulare Kommunikationssystem ferner umfasst:
eine Einrichtung zum Verweisen einer Anforderung eines Herunterladens von der Teilnehmereinheit im Besuchsnetzwerk an die Plausibilitätsprüfpunktfunktion im eigenen Netzwerk.

7. Zellulares Kommunikationssystem nach Anspruch 1, bei dem der Konten (50) von einer Funkkommunikationsressource bedient wird.

8. Zellulares Kommunikationssystem nach Anspruch 1, ferner **gekennzeichnet durch** ein global verfügbares Netzwerk (12), das zwischen den Datenspeicher (14, 16, 18) der dritten Partei und die Plausibilitätsprüfpunktfunktion (44) gekoppelt ist.

9. Zellulares Kommunikationssystem nach Anspruch 1, bei dem der vorgegebene Betriebsstatus eine vollständige Betriebskonformität ist.

10. Verfahren zur Steuerung eines Herunterladens von Daten aus einem Datenspeicher einer dritten Partei, in dem zumindest entweder ein Dateninhalt oder ein Code gespeichert ist, auf einen anfordernden (100) Knoten in einem Netzwerk eines zellularen Kommunikationssystems, **gekennzeichnet durch** die Schritte:
Speichern (132) von empfangenem Code und irgendwelchen zugehörigen Fehlern (138),
Prüfen (108), ob die Anforderung eines Herunterladens von dem Knoten einen Dateninhalt oder Code betrifft, der zuvor bewertet und gespeichert wurde, wobei
wenn ein derartiger Inhalt oder Code gespeichert ist, Abrufen (110) der zugehörigen Fehler und Vergleichen (112) der Fehler mit einem Akzeptierbarkeitsniveau, wobei
bei akzeptablem Fehlerniveau Herunterladen (116) des Dateninhalts oder Codes direkt auf den anfordernden Knoten, und
bei inakzeptablem Fehlerniveau Zurückweisen (118) der Anforderung eines Herunterladens von dem Knoten, und
wenn kein derartiger Inhalt oder Code gespeichert ist,
Abfangen zumindest entweder eines Dateninhalts oder eines Codes, der als Reaktion auf die Anforderung eines derartigen Herunterladens **durch** den Konten aus dem Datenspeicher einer dritten Partei heruntergeladen wird, im Netzwerk,
Erzeugen (124) einer den Knoten repräsentierenden Emulation,
Veranlassen (124) einer operativen Interaktion zwischen der Emulation und zumindest entweder dem Dateninhalt oder dem Code, der aus dem Datenspeicher einer dritten Partei heruntergeladen wird,
Bewerten (128) des Betriebsstatus der Emulation nach der operativen Interaktion zumindest entweder des Dateninhalts oder des Codes, der aus dem Datenspeicher einer dritten Partei heruntergeladen wird, mit dem den Knoten repräsentierenden Emulator und
selektives Weiterleiten (134) zumindest entweder des Dateninhalts oder des Codes, der aus dem Datenspeicher einer dritten Partei heruntergeladen wird, an den Knoten nach Maßgabe der Bewertung, ob der Betriebsstatus einem vorgegebenen Betriebsstatus genügt.

11. Verfahren zur Steuerung eines Herunterladens von Daten nach Anspruch 10, ferner **gekennzeichnet durch** den Schritt der Bewertung von zumindest entweder der Kompatibilität des Dateninhalts bzw. des Codes, der aus dem Datenspeicher der dritten Partei heruntergeladen wird, oder darin enthaltener Sicherheitsangriffe.

12. Verfahren zur Steuerung eines Herunterladens von Daten nach Anspruch 10, bei dem der Speicherschritt das Speichern von zumindest Einigem des Folgenden in einem Code- und Fehlerspeicher innerhalb des Netzwerks umfasst:
mehreren unterschiedlichen, unterschiedlichen Arten von Knoten in dem zellularen Kommunikationssystem zugeordneten Knotenemulationen, und
einem aus identifizierten Datenspeichern dritter Parteien heruntergeladenen Dateninhalt.

13. Verfahren zur Steuerung eines Herunterladens von Daten nach Anspruch 12, bei dem der Prüfschritt umfasst:
Suchen nach einer Adresse eines Datenspeichers einer dritten Partei in einem Code- und Fehlerspeicher des Netzwerks und
direktes Herunterladen von der Adresse zugeordnetem Dateninhalt und Code auf den Knoten (50).

14. Verfahren zur Steuerung eines Herunterladens von Daten nach Anspruch 10, bei dem das Netzwerk ferner einen über eine zugewiesene sichere Verbindung mit mindestens einem Datenspeicher einer dritten Partei gekoppelten Netzübergang umfasst, wobei das Verfahren ferner durch den folgenden Schritt **gekennzeichnet** ist:
selektive Deaktivierung der Erzeugung der Emulation und der Bewertung des Betriebsstatus als Reaktion auf die Anforderung eines Herunterladens von zumindest entweder einem Dateninhalt oder einem Code über die zugewiesene sichere Verbindung.

15. Verfahren zur Steuerung eines Herunterladens von Daten nach Anspruch 14, ferner **gekennzeichnet durch** den Schritt der Weiterleitung einer Anforderung eines Herunterladens von einer Teilnehmereinheit in einem Besuchsnetzwerk über ein eigenes Netzwerk.

16. Verfahren zur Steuerung eines Herunterladens von Daten nach Anspruch 10, bei dem der Knoten von einer Funkkommunikationsressource versorgt wird.

17. Verfahren zur Steuerung eines Herunterladens von Daten nach Anspruch 10, bei dem ein global verfügbares Netzwerk den Datenspeicher einer dritten Partei mit dem eigenen Netzwerk koppelt.

18. Steuervorrichtung (44) zur Regelung eines Herunterladens von Daten aus einem Datenspeicher einer dritten Partei, in dem zumindest entweder ein Dateninhalt oder ein Code gespeichert ist, auf einen anfordernden Konten in einem Netzwerk eines zellularen Kommunikationssystems, **gekennzeichnet durch**:
eine Einrichtung zum Speichern eines empfangenen Codes und irgendwelcher zugehöriger Fehler gemäß der Bestimmung **durch** eine Codebewertungseinrichtung und
eine Einrichtung zur Überprüfung, ob die Anforderung eines Herunterladens von dem Knoten einen Dateninhalt oder einen Code betrifft, der zuvor überprüft und in der Speichereinrichtung gespeichert wurde, wobei
beim Vorhandensein eines derartigen Inhalts oder Codes in der Speichereinrichtung die Prüfeinrichtung so betrieben werden kann, dass sie die zugehörigen Fehler abruft und mit einem Akzeptierbarkeitsniveau vergleicht, wobei
bei akzeptablem Fehlerniveau die Steuervorrichtung so arbeitet, dass sie den Dateninhalt oder Code direkt auf den anfordernden Knoten herunterlädt, und
bei inakzeptablem Fehlerniveau die Steuervorrichtung so betrieben werden kann, dass sie die Anforderung eines Herunterladens von dem Knoten zurückweist, und
bei fehlender Speicherung eines derartigen Inhalts oder Codes die Vorrichtung ferner umfasst:
eine operativ so konfigurierte Einrichtung, dass sie zumindest entweder einen Dateninhalt oder einen Code abfängt, der als Reaktion auf die Anforderung eines derartigen Herunterladens **durch** den Knoten aus dem Datenspeicher einer dritten Partei heruntergeladen wird,
einen den Knoten repräsentierenden Emulator, der mit zumindest entweder dem Dateninhalt oder dem Code interagiert, der aus dem Datenspeicher einer dritten Partei heruntergeladen wird,
eine Codebewertungseinrichtung zur Bewertung eines Betriebsstatus des Emulators nach der Interaktion zumindest entweder des Dateninhalts oder des Codes, der aus dem Datenspeicher einer dritten Partei heruntergeladen wird, mit dem den Knoten repräsentierenden Emulator und
eine Einrichtung zum selektiven Weiterleiten zumindest entweder des Dateninhalts oder des Codes, der aus dem Datenspeicher einer dritten Partei heruntergeladen wird, an den Knoten, nach Maßgabe der Bewertung, ob der Betriebsstatus einem vorgegebenen Betriebsstatus genügt.

19. Steuervorrichtung nach Anspruch 18, ferner **gekennzeichnet durch** eine Einrichtung zur Bewertung von zumindest entweder der Kompatibilität des Dateninhalts bzw. des Codes, der von dem Datenspeicher der dritten Partei heruntergeladen wird, oder darin enthaltener Sicherheitsangriffe.

20. Steuervorrichtung nach Anspruch 18, bei der die Speichereinrichtung einen Code- und Fehlerspeicher (46) umfasst, in dem zumindest Einiges des Folgenden gespeichert ist:
mehrere unterschiedliche, unterschiedlichen Arten von mit dem Plausibilitätsprüfpunkt gekoppelten Knoten zugeordnete Knotenemulationen und
ein von identifizierten Datenspeichern dritter Parteien heruntergeladener Dateninhalt.

21. Steuervorrichtung nach Anspruch 20, bei der die Prüfeinrichtung umfasst:
eine auf eine von dem Knoten erzeuge Adresse eines Datenspeichers einer dritten Partei reagierende Einrichtung zum Suchen der Adresse in dem Code- und Fehlerspeicher und
eine Einrichtung zum direkten Herunterladen von zumindest entweder einem Dateninhalt oder einem Code, der der Adresse zugeordnet ist, aus dem Code- und Fehlerspeicher auf den Knoten.

22. Steuervorrichtung nach Anspruch 18, ferner **gekennzeichnet durch**:
eine Einrichtung zum selektiven Deaktivieren des Emulators als Reaktion auf eine Anforderung eines Herunterladens von zumindest entweder einem Dateninhalt oder einem Code über eine zugewiesene sichere Verbindung, die in der Steuervorrichtung eingeht.

23. Computerprogrammelement mit Computerprogrammcodemitteln zum Veranlassen der Ausführung einer Prozedur zum Ausführen der Verfahrensschritte gemäß Anspruch 10 durch eine Steuereinheit.

24. Computerprogrammelement nach Anspruch 23, vorliegend auf einem computerlesbaren Medium.

25. Computerprogrammerzeugnis für eine Steuereinheit (44), die das Herunterladen von Daten aus einem Datenspeicher einer dritten Partei, in dem zumindest entweder ein Dateninhalt oder ein Code gespeichert ist, auf einen anfordernden Knoten in einem eigenen Netzwerk eines zellularen Kommunikationssystems steuert, **gekennzeichnet durch**:
Code zum Speichern eines empfangenen Codes und irgendwelcher von einer Codebewertungseinrichtung bestimmten zugehörigen Fehler und
Code zum Überprüfen, ob die Anforderung eines Herunterladens von dem Knoten einen Dateninhalt oder Code betrifft, der zuvor bewertet und gespeichert wurde, wobei
wenn ein derartiger Inhalt oder Code gespeichert ist, der Prüfcode die zugehörigen Fehler abruft und mit einem Akzeptierbarkeitsniveau vergleicht, wobei
bei akzeptablem Fehlerniveau die Steuereinheit so arbeitet, dass sie den Dateninhalt oder Code direkt auf den anfordernden Knoten herunterlädt, und
bei inakzeptablem Fehlerniveau die Steuereinheit so arbeitet, dass sie die Anforderung eines Herunterladens von dem Knoten zurückweist, und
wenn kein derartiger Inhalt oder Code gespeichert ist, die Steuereinheit ferner umfasst:
Code, der auf die Anforderung eines Herunterladens **durch** den Knoten reagiert und die Steuereinheit anweist, zumindest entweder einen Dateninhalt oder einen Code abzufangen, der von dem Datenspeicher einer dritten Partei heruntergeladen wird,
Code, der die Steuereinheit anweist, eine den Knoten repräsentierende Emulation zu erzeugen,
Code, der die Steuereinheit anweist, eine operative Interaktion zwischen der Emulation und zumindest entweder dem Dateninhalt oder dem Code zu veranlassen, der von dem Datenspeicher einer dritten Partei heruntergeladen wurde,
Code, der die Steuereinheit anweist, nach der operativen Interaktion zwischen zumindest entweder dem Dateninhalt oder dem Code, der von dem Datenspeicher einer dritten Partei heruntergeladen wurde, und dem den Knoten repräsentierenden Emulator einen Betriebsstatus der Emulation zu bewerten, und
Code, der die Steuereinheit anweist, zumindest entweder den Dateninhalt oder den Code, der von dem Datenspeicher einer dritten Partei heruntergeladen wurde, nach Maßgabe der Bewertung, ob der Betriebsstatus einem vorgegebenen Betriebsstatus genügt, selektiv an den Knoten weiterzuleiten,
wobei sich die Codes auf einem computerlesbaren Medium befinden.

26. Computerprogrammerzeugnis nach Anspruch 25, ferner **gekennzeichnet durch**:
Code, der die Steuereinheit anweist, jeweils zumindest entweder die Kompatibilität des Dateninhalts bzw. des Codes, die von dem Datenspeicher der dritten Partei heruntergeladen werden, oder darin enthaltene Sicherheitsangriffe zu bewerten.

27. Computerprogrammerzeugnis nach Anspruch 25, ferner **gekennzeichnet durch**
Code, der die Steuereinheit anweist, in einem Code-und Fehlerspeicher des eigenen Netzwerks eine Adresse eines Datenspeichers einer dritten Partei zu suchen, und
Code, der die Steuereinheit anweist, zumindest entweder einen Dateninhalt oder einen Code, der der Adresse zugeordnet ist, direkt aus dem Code- und Fehlerspeicher auf den Knoten herunterzuladen.

28. Computerprogrammerzeugnis nach Anspruch 25, bei dem das Netzwerk ferner einen über eine zugewiesene sichere Verbindung mit mindestens einem Datenspeicher einer dritten Partei gekoppelten Netzübergang aufweist, wobei das Computerprogrammerzeugnis ferner **gekennzeichnet ist durch**:
Code, der die Steuereinheit anweist, die Erzeugung der Emulation und die Bewertung des Betriebsstatus als Reaktion auf die Anforderung eines Herunterladens von zumindest entweder einem Dateninhalt oder einem Code über die zugewiesene sichere Leitung selektiv zu deaktivieren.

29. Computerprogrammerzeugnis nach Anspruch 25, ferner **gekennzeichnet durch**:
Code, der die Steuereinheit anweist, eine Anforderung eines Herunterladens von einer Teilnehmereinheit in einem Besuchsnetzwerk über das eigene Netzwerk der Teilnehmereinheit weiterzuleiten.

## Revendications

1. Système de communication cellulaire (10) comprenant une interface (34) de liaison avec un référentiel de données de tierce partie (14, 16, 18) stockant au moins l'un d'un contenu de données et d'un code, et un noeud (50) ayant des moyens pour demander un téléchargement d'au moins l'un du contenu de données et du code depuis le référentiel de données de tierce partie, le système de communication cellulaire étant **caractérisé par** :
un référentiel local de codes et de défaillances (46) couplé à l'interface (34), le référentiel local servant à stocker le code reçu et toutes les défaillances qui lui sont associées, tel que déterminé par les moyens d'évaluation de code ; et
une fonction point de vérification de sanité (44) agissant en fonction du référentiel de données de tierce partie (14, 16, 18) et couplée au noeud (50), la fonction point de vérification de sanité comprenant des moyens pour vérifier si la demande de téléchargement émanant du noeud concerne un contenu de données ou un code précédemment évalué et stocké dans le référentiel local, où
• si ce contenu ou ce code est présent dans le référentiel local (46), les moyens de vérification fonctionnent de manière à récupérer les défaillances qui lui sont associées et à comparer les défaillances à un niveau d'acceptabilité, où
- si un niveau de défaillances est acceptable, la fonction point de vérification de sanité (44) fonctionne de manière à télécharger le contenu de données ou le code directement vers le noeud (50) demandeur, et
- si le niveau de défaillances n'est pas acceptable, la fonction point de vérification de sanité (44) fonctionne de manière à refuser la demande de téléchargement émanant du noeud (50), et
• si ce contenu ou ce code n'est pas présent dans le référentiel local, la fonction point de vérification de sanité (44) fonctionne de manière à intercepter au moins l'un d'un contenu de données et d'un code téléchargé depuis le référentiel de données de tierce partie (14, 16, 18) en réponse à la demande de ce téléchargement par le noeud (50), la fonction point de vérification de sanité (44) comprenant :
- un émulateur représentant le noeud et interagissant avec l'au moins un du contenu de données et du code téléchargé depuis le référentiel de données de tierce partie (14, 16, 18) ;
- des moyens d'évaluation de code pour évaluer un état opérationnel de l'émulateur après une interaction d'au moins l'un du contenu de données et du code téléchargé depuis le référentiel de données de tierce partie (14, 16, 18) avec l'émulateur représentant le noeud ; et
- des moyens pour transférer sélectivement au noeud (50) l'au moins un du contenu de données et du code téléchargé depuis le référentiel de données de tierce partie (14, 16, 18), dont l'état opérationnel a été évalué et satisfait à un état opérationnel prédéterminé.

2. Système de communication cellulaire selon la revendication 1, dans lequel la fonction point de vérification de sanité (44) comprend des moyens pour évaluer au moins l'une des conditions de compatibilité et d'attaques de sécurité dans, respectivement, le contenu de données et le code téléchargés depuis le référentiel de données de tierce partie (14, 16, 18).

3. Système de communication cellulaire selon la revendication 1, dans lequel le référentiel de codes et de défaillances (46) stocke au moins certains de :
plusieurs émulations de noeuds différentes associées à différentes formes de noeuds couplées au point de vérification de sanité (44) ; et
un contenu de données téléchargé depuis des référentiels de données de tierce partie (14, 16, 18) identifiés.

4. Système de communication cellulaire selon la revendication 3, dans lequel les moyens de vérification réagissent à une adresse d'un référentiel de données de tierce partie générée par les moyens de demande de téléchargement, afin de rechercher l'adresse dans le référentiel de codes et de défaillances (46) ; et le téléchargement direct vers le noeud (50) d'un contenu de données et d'un code est associé à l'adresse.

5. Système de communication cellulaire selon la revendication 1,
**caractérisé, en outre, par** :
une passerelle (34) vers un réseau de rattachement (13) contenant la fonction de vérification de sanité (44) ; et
une liaison sûre dédiée (30) avec au moins un référentiel de données de tierce partie (18) ;
et dans lequel le réseau de rattachement (13) comprend, en outre :
des moyens pour désactiver sélectivement la fonction point de vérification de sanité en réponse à une demande de téléchargement d'au moins l'un d'un contenu de données et d'un code via la liaison sûre dédiée.

6. Système de communication cellulaire selon la revendication 5, **caractérisé, en outre, par** un réseau de visite (48) couplé au réseau de rattachement (13), le réseau de visite supportant une communication avec une unité d'abonné (50) principalement affiliée au réseau de rattachement, le système de communication cellulaire comprenant, en outre :
des moyens pour acheminer une demande de téléchargement émanant de l'unité d'abonné dans le réseau de visite jusqu'à la fonction point de vérification de sanité située dans le réseau de rattachement.

7. Système de communication cellulaire selon la revendication 1, dans lequel le noeud (50) est desservi par une ressource de communication radio.

8. Système de communication cellulaire selon la revendication 1, **caractérisé, en outre, par** un réseau à couverture mondiale (12) couplé entre le référentiel de données de tierce partie (14, 16, 18) et la fonction point de vérification de sanité (10).

9. Système de communication cellulaire selon la revendication 1, dans lequel l'état opérationnel prédéterminé est la conformité opérationnelle totale.

10. Procédé de commande d'un téléchargement de données vers un noeud demandeur (100) dans un réseau d'un système de communication cellulaire, depuis un référentiel de données de tierce partie stockant au moins l'un d'un contenu de données et d'un code, le procédé étant
**caractérisé par** les étapes consistant à :
stocker (132) le code reçu et toutes les défaillances (138) qui lui sont associées ;
vérifier (108) si la demande de téléchargement émanant du noeud concerne un contenu de données ou un code précédemment évalué et stocké, et
• si ce contenu ou ce code est stocké, récupérer (110) les défaillances qui lui sont associées et comparer (112) les défaillances à un niveau d'acceptabilité, et
- si un niveau de défaillances est acceptable, télécharger (116) le contenu de données ou le code directement vers le noeud demandeur, et
- si le niveau de défaillances n'est pas acceptable, refuser (118) la demande de téléchargement émanant du noeud, et
• si ce contenu ou ce code n'est pas stocké,
- intercepter dans le réseau au moins l'un d'un contenu de données et d'un code téléchargé depuis le référentiel de données de tierce partie en réponse à la demande de ce téléchargement par le noeud ;
- générer (124) une émulation représentant le noeud ;
- provoquer (124) une interaction opérationnelle entre l'émulation et au moins l'un du contenu de données et du code téléchargé depuis le référentiel de données de tierce partie ;
- évaluer (128) un état opérationnel de l'émulation après une interaction opérationnelle d'au moins l'un du contenu de données et du code téléchargé depuis le référentiel de données de tierce partie avec l'émulateur représentant le noeud ; et
- transférer sélectivement (134) au noeud l'au moins un du contenu de données et du code téléchargé depuis le référentiel de données de tierce partie, dont l'état opérationnel a été évalué et satisfait à un état opérationnel prédéterminé.

11. Procédé de commande d'un téléchargement de données selon la revendication 10, **caractérisé, en outre, par** l'étape d'évaluation d'au moins l'une des conditions de compatibilité et d'attaques de sécurité dans, respectivement, le contenu de données et le code téléchargés depuis le référentiel de données de tierce partie.

12. Procédé de commande d'un téléchargement de données selon la revendication 10, dans lequel l'étape de stockage comprend le stockage, dans un référentiel de codes et de défaillances situé à l'intérieur du réseau, d'au moins certains de :
plusieurs émulations de noeuds différentes associées à différentes formes de noeuds dans le système de communication cellulaire ; et
un contenu de données téléchargé depuis des référentiels de données de tierce partie identifiés.

13. Procédé de commande d'un téléchargement de données selon la revendication 12, dans lequel l'étape de vérification comprend :
la recherche d'une adresse d'un référentiel de données de tierce partie dans un référentiel de codes et de défaillances du réseau ; et
le téléchargement direct vers le noeud (50) du contenu de données et du code associés à l'adresse.

14. Procédé de commande d'un téléchargement de données selon la revendication 10, dans lequel le réseau comprend, en outre, une passerelle couplée à au moins un référentiel de données de tierce partie via une liaison sûre dédiée, le procédé étant, en outre, **caractérisé par** l'étape qui consiste à :
désactiver sélectivement la génération de l'émulation et l'évaluation de l'état opérationnel en réponse à la demande de téléchargement d'au moins l'un d'un contenu de données et d'un code via la liaison sûre dédiée.

15. Procédé de commande d'un téléchargement de données selon la revendication 14, **caractérisé, en outre, par** l'étape consistant à acheminer une demande de téléchargement émanant d'une unité d'abonné dans un réseau de visite, via un réseau de rattachement.

16. Procédé de commande d'un téléchargement de données selon la revendication 10, dans lequel le noeud est desservi par une ressource de communication radio.

17. Procédé de commande d'un téléchargement de données selon la revendication 10, dans lequel un réseau à couverture mondiale couple le référentiel de données de tierce partie au réseau de rattachement.

18. Dispositif de commande (44) pour réguler un téléchargement de données vers un noeud demandeur dans un réseau d'un système de communication cellulaire, depuis un référentiel de données de tierce partie stockant au moins l'un d'un contenu de données et d'un code, le dispositif de commande (44) étant **caractérisé par** :
des moyens pour stocker le code reçu et toutes les défaillances qui lui sont associées, tel que déterminé par les moyens d'évaluation de code ; et
des moyens pour vérifier si la demande de téléchargement émanant du noeud concerne un contenu de données ou un code précédemment évalué et stocké dans les moyens de stockage, où
• si ce contenu ou ce code est présent dans les moyens de stockage, les moyens de vérification fonctionnent de manière à récupérer les défaillances qui lui sont associées et à comparer les défaillances à un niveau d'acceptabilité, où
- si un niveau de défaillances est acceptable, le dispositif de commande fonctionne de manière à télécharger le contenu de données ou le code directement vers le noeud demandeur, et
- si le niveau de défaillances n'est pas acceptable, le dispositif de commande fonctionne de manière à refuser la demande de téléchargement émanant du noeud, et
• si ce contenu ou ce code n'est pas stocké, le dispositif comprend, en outre :
- des moyens fonctionnellement configurés pour intercepter au moins l'un d'un contenu de données et d'un code téléchargé depuis le référentiel de données de tierce partie en réponse à la demande de ce téléchargement par le noeud ;
- un émulateur représentant le noeud et interagissant avec l'au moins un du contenu de données et du code téléchargé depuis le référentiel de données de tierce partie ;
- des moyens d'évaluation de code pour évaluer un état opérationnel de l'émulateur après une interaction d'au moins l'un du contenu de données et du code téléchargé depuis le référentiel de données de tierce partie avec l'émulateur représentant le noeud ; et
- des moyens pour transférer sélectivement au noeud l'au moins un du contenu de données et du code téléchargé depuis le référentiel de données de tierce partie, dont l'état opérationnel a été évalué et satisfait à un état opérationnel prédéterminé.

19. Dispositif de commande selon la revendication 18, **caractérisé, en outre, par** des moyens pour évaluer au moins l'une des conditions de compatibilité et d'attaques de sécurité dans, respectivement, le contenu de données et le code téléchargés depuis le référentiel de données de tierce partie.

20. Dispositif de commande selon la revendication 18, dans lequel les moyens de stockage comprennent un référentiel de codes et de défaillances (46) stockant au moins certains de :
plusieurs émulations de noeuds différentes associées à différentes formes de noeuds couplées au point de vérification de sanité ; et
un contenu de données téléchargé depuis des référentiels de données de tierce partie identifiés.

21. Dispositif de commande selon la revendication 20, dans lequel les moyens de vérification comprennent :
des moyens, réagissant à une adresse d'un référentiel de données de tierce partie générée par le noeud, afin de rechercher l'adresse dans le référentiel de codes et de défaillances ; et
des moyens pour télécharger directement depuis le référentiel de codes et de défaillances vers le noeud au moins l'un d'un contenu de données et d'un code associé à l'adresse.

22. Dispositif de commande selon la revendication 18, **caractérisé, en outre, par** des moyens pour désactiver sélectivement l'émulateur en réponse à une demande de téléchargement d'au moins l'un d'un contenu de données et d'un code via une liaison sûre dédiée, arrivant au dispositif de commande.

23. Elément de programme informatique comprenant des moyens de code programme informatique pour faire en sorte qu'un contrôleur exécute une procédure de manière à effectuer les étapes de procédé de la revendication 10.

24. Elément de programme informatique selon la revendication 23, mis en oeuvre sur un support pouvant être lu par un ordinateur.

25. Produit de programme informatique pour un contrôleur (44) qui commande le téléchargement de données vers un noeud demandeur dans un réseau de rattachement d'un système de communication cellulaire, depuis un référentiel de données de tierce partie stockant au moins l'un d'un contenu de données et d'un code, le produit de programme informatique étant **caractérisé par** :
un code pour le stockage du code reçu et de toutes les défaillances qui lui sont associées, tel que déterminé par les moyens d'évaluation de code ; et
un code pour la vérification du fait que la demande de téléchargement émanant du noeud concerne un contenu de données ou un code précédemment évalué et stocké, où
• si ce contenu ou ce code est stocké, le code de vérification récupère les défaillances qui lui sont associées et compare les défaillances à un niveau d'acceptabilité, où
- si un niveau de défaillances est acceptable, le contrôleur fonctionne de manière à télécharger le contenu de données ou le code directement vers le noeud demandeur, et
- si le niveau de défaillances n'est pas acceptable, le contrôleur fonctionne de manière à refuser la demande de téléchargement émanant du noeud, et
• si ce contenu ou ce code n'est pas stocké, le contrôleur comprend, en outre :
- un code, réagissant à une demande de téléchargement émanant du noeud, qui donne au contrôleur l'instruction d'intercepter au moins l'un d'un contenu de données et d'un code téléchargé depuis le référentiel de données de tierce partie ;
- un code qui donne au contrôleur l'instruction de générer une émulation représentant le noeud ;
- un code qui donne au contrôleur l'instruction de provoquer une interaction opérationnelle entre l'émulation et au moins l'un du contenu de données et du code téléchargé depuis le référentiel de données de tierce partie ;
- un code qui donne au contrôleur l'instruction d'évaluer un état opérationnel de l'émulation après une interaction opérationnelle d'au moins l'un du contenu de données et du code téléchargé depuis le référentiel de données de tierce partie avec l'émulateur représentatif du noeud ; et
- un code qui donne au contrôleur l'instruction de transférer sélectivement au noeud l'au moins un du contenu de données et du code téléchargé depuis le référentiel de données de tierce partie, dont l'état opérationnel a été évalué et satisfait à un état opérationnel prédéterminé ;
où les codes résident dans un support pouvant être lu par ordinateur.

26. Produit de programme informatique selon la revendication 25, **caractérisé, en outre, par** :
un code qui donne au contrôleur l'instruction d'évaluer au moins l'une des conditions de compatibilité et d'attaques de sécurité dans, respectivement, le contenu de données et le code téléchargés depuis le référentiel de données de tierce partie.

27. Produit de programme informatique selon la revendication 25, **caractérisé, en outre, par** :
un code qui donne au contrôleur l'instruction de rechercher une adresse d'un référentiel de données de tierce partie dans un référentiel de codes et de défaillances d'un réseau de rattachement ; et
un code qui donne au contrôleur l'instruction de télécharger directement depuis le référentiel de codes et de défaillances vers le noeud au moins l'un d'un contenu de données et d'un code associé à l'adresse.

28. Produit de programme informatique selon la revendication 25, dans lequel le réseau comprend, en outre, une passerelle couplée à au moins un référentiel de données de tierce partie via une liaison sûre dédiée, et dans lequel le produit de programme informatique est, en outre, **caractérisé par** :
un code qui donne au contrôleur l'instruction de désactiver sélectivement la génération de l'émulation et l'évaluation de l'état opérationnel en réponse à la demande de téléchargement d'au moins l'un d'un contenu de données et d'un code via la liaison sûre dédiée.

29. Produit de programme informatique selon la revendication 25, **caractérisé, en outre, par** :
un code qui donne au contrôleur l'instruction d'acheminer une demande pour le téléchargement émanant d'une unité d'abonné dans un réseau de visite via le réseau de rattachement de l'unité d'abonné.
